## Europäisches Patentamt
## European Patent Office
## Office européen des brevets

(19)

(11) Veröffentlichungsnummer: **0 124 629**
**B1**

(12) # EUROPÄISCHE PATENTSCHRIFT

(45) Veröffentlichungstag der Patentschrift:
02.07.86

(51) Int. Cl.⁴: **F 16 B 41/00, F 16 K 35/00**

(21) Anmeldenummer: **83104426.8**

(22) Anmeldetag: **05.05.83**

(54) **Diebstahlsicherung für Heizkörperventil-Thermostaten.**

(43) Veröffentlichungstag der Anmeldung:
14.11.84 Patentblatt 84/46

(45) Bekanntmachung des Hinweises auf die Patenterteilung:
02.07.86 Patentblatt 86/27

(84) Benannte Vertragsstaaten:
AT BE CH DE FR GB IT LI NL SE

(56) Entgegenhaltungen:
EP-A-0 060 379
DE-A-2 603 461
DE-A-2 750 956
DE-A-3 102 335
FR-A-591 256
FR-A-961 591
US-A-1 722 541

(73) Patentinhaber: Honeywell- Braukmann GmbH, Hardhofweg, D-6950 Mosbach/Baden (DE)

(72) Erfinder: Gocke, Eberhard, Bahnhofstrasse 16, D-6950 Mosbach (DE)

(74) Vertreter: Herzbach, Dieter, Honeywell Europe S.A. Holding KG Patent- und Lizenzabteilung Kaiserleistrasse 55 Postfach 184, D-6050 Offenbach am Main (DE)

EP 0 124 629 B1

## Beschreibung

Die vorliegende Erfindung bezieht sich auf eine Diebstahlsicherung für Heizkörperventil-Thermostaten nach dem Gattungsbegriff des Anspruches 1.

Die Forderung nach derartigen Diebstahlsicherungen besteht insbesondere dann, wenn Thermostate in Gebäuden montiert werden, die der öffentlichkeit zugänglich sind. Thermostaten mit einer solchen Diebstahlsicherung werden daher praktisch von allen Herstellern als sogenannte Behördenmodelle angeboten.

Diebstahlsicherungen sind in vielfältigen Ausführungen bekannt. So ist beispielsweise aus der DE-A-3 102 335 eine Diebstahlsicherung bekannt, bei der die zur Befestigung des Heizkörperventil-Thermostaten am Heizkörperventil dienende Überwurfmutter von zwei Ringhalbschalen umgeben ist, die durch einen übergeschobenen geschlossenen metallischen Sicherungsring in ihrer Stellung gehalten werden. Ähnlich aufgebaute Diebstahlsicherungen sind durch die DE-A-2 603 461 und die EP-A-0 060 379 bekannt geworden. Diese bekannten Diebstahlsicherungen sind konstruktiv relativ aufwendig und teuer und sie beeinflussen zudem negativ das äußere Erscheinungsbild des Heizkörperthermostaten.

Es ist daher die Aufgabe der vorliegenden Erfindung, eine Diebstahlsicherung anzugeben, die einen äußerst einfachen und preiswerten Aufbau aufweist und darüberhinaus das äußere Erscheinungsbild des Thermostaten nicht beeinträchtigt. Die Lösung dieser Aufgabe gelingt gemäß der im Anspruch 1 gekennzeichneten Erfindung. Weitere vorteilhafte Ausgestaltungen der Erfindung sind den Unteransprüchen entnehmbar.

Das Ratschenprinzip als Diebstahlsicherung ist grundsätzlich aus der DE-A-2 750 956 bekannt. Bei dem dortigen Behördenmodell wird jedoch der Heizkörperthermostat nicht über eine Überwurfmutter mit dem Heizkörperventil verbunden; vielmehr gelangt dort eine Sonderkonstruktion zur Anwendung, bei der eine ringförmige Scheibe mit wenigstens einer von der Scheibe abstehenden Klaue drehfest mit einem Rohrstutzen verbunden ist und das Thermostatgehäuse einen mit einer Verzahnung versehenen Ring aufweist. Beim Aufschrauben des mit einem Innengewinde versehenen Thermostatgehäuses auf den Rohrstutzen gelangt die Klaue mit der Verzahnung in Eingriff und verhindert somit ein Entfernen des Thermostatgehäuses von dem Rohrstutzen. Gegenüber dieser bekannten Konstruktion besitzt die erfindungsgemäße Konstruktion den Vorteil, daß ohne wesentliche Modifikationen jeder handelsübliche Heizkörperthermostat mit einer Diebstahlsicherung versehen werden kann. Gemäß der Erfindung ist lediglich eine Modifikation der Überwurfmutter erforderlich.

Ferner zeigen die US-A-1 722 541 und die FR-A-961 591 einen in eine Mutter eingelegten Federring, der mit einem abgewinkelten Ende in eine Längsnut im Gewindebolzen eingreift, um eine Drehsicherung herzustellen. Eine ähnliche Lösung ist aus der FR-A 591 256 bekannt.

Anhand von in den Figuren der beiliegenden Zeichnung dargestellten Ausführungsbeispielen sei im folgenden die Erfindung näher erläutert. Es zeigen:

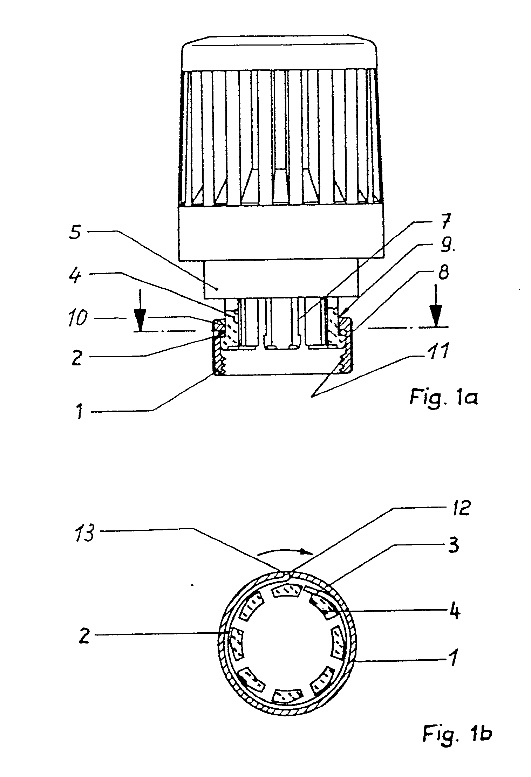

Fig.1a einen Heizkörperthermostaten mit Überwurfmutter;

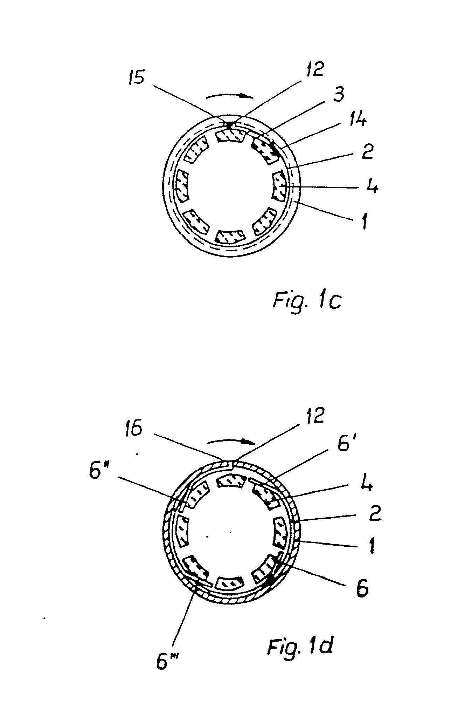

Fig.1b einen ersten Schnitt durch Fig. 1 zur Veranschaulichung eines ersten Ausführungsbeispieles der Erfindung;

Fig.1c einen zweiten Schnitt durch Fig.1 zur Veranschaulichung eines zweiten Ausführungsbeispiels der Erfindung; und

Fig.1d einen dritten Schnitt durch Fig. 1 zur Veranschaulichung eines dritten Ausführungsbeispieles der Erfindung.

Gemäß Fig.1 weist ein Heizkörper-Thermostatgehäuse 5 ein mit achsparallelen Schlitzen 7 und einem nach außen weisenden Ringbund 8 versehenes buchsenförmiges Gehäuseteil 9 auf. Der Gehäuseteil 9 besteht ebenso wie das Thermostatgehäuse 5 im allgemeinen aus Kunststoff, so daß durch die Schlitze 7 gebildete Stege 4 radial nachgiebig sind und das Überschieben einer mit einem nach innen weisenden Gegen-Ringbund 10 versehenen Überwurfmutter 1 gestatten.

Die Überwurfmutter 1 greift mit ihrem Innengewinde 11 über einen das Heizkörperventil aufweisenden Rohrstutzen mit Außengewinde, was hier nicht näher dargestellt ist.

In der Überwurfmutter 1 ist zwischen dem Ringbund 8 und dem Gegen-Ringbund 10 ein federndes Element 2 axial unverschiebbar angeordnet. Das federnde Element 2 besteht gemäß Figur 1b aus einem Draht, der über einen wesentlichen Teil des Innenumfanges an der Überwurfmutter 1 anliegt, an einem Ende abgewinkelt ist, um eine Federzunge 3 zu bilden und mit dem anderen Ende 12 rechtwinklig abgebogen ist und in eine radial gerichtete Nut 13 in der Überwurfmutter gesteckt ist, um gegen Verdrehen gesichert zu sein. Wie man Fig.1b entnimmt, ratscht die Federzunge 3 beim Autschrauben der Überwurfmutter 1 über die Stege 4. Ein Abschrauben der Überwurfmutter 1 wird verhindert, da die Federzunge 3 hierbei die Stege 4 hinterstellt.

Gemäß Fig.1c ist das aus Federdraht bestehende federnde Element 2 in eine innere Umfangsnut 14 in der Überwurfmutter 1 eingelegt und die Sicherung gegen Verdrehen erfolgt durch rechtwinkliges Abbiegen und Einlegen des einen Endes 12 in eine achsparallele Nut 15.

Gemäß Fig.1d besteht das federnde Element 2 aus einem Federblech von dem mehrere Federzungen 6,6',6'' und 6'' abgebogen sind, wobei diese Federzungen in einem Abstand angeordnet sind, der dem Abstand der Stege 4 entspricht. Das Befestigungsende 12 des Federbleches 2 ist rechtwinklig abgebogen und in einen achsparallelen Schlitz 16 in der Überwurfmutter 1 gesteckt.

**Patentansprüche:**

1. Diebstahlsicherung für Heizkörperventil-Thermostate mit einer den Thermostaten (5) mit dem Heizkörperventil verbindenden Überwurfmutter (1) die über ein mit achsparallelen Schlitzen (7) versehenes, federndes, buchsenförmiges Gehäuseteil (9) des Thermostate, (5) geschoben ist und mit einem Gewinde (11)zan einem Rohrstutzten verschraubt ist, dadurch gekennzeichnet, daß im Inneren der Überwurfmutter (1) verdrehsicher ein federndes Element (2) angeordnet ist, welches wenigstens ein abgewinkeltes Ende (3,6) aufweist, mit welchem es in wenigstens einen der Schlitze (7) eingreift.

2. Diebstahlsicherung nach Anspruch 1, dadurch gekennzeichnet, daß das federnde Element (2) aus einem Draht besteht.

3. Diebstahlsicherung nach Anspruch 1, dadurch gekennzeichnet. daß das federnde Element (2) aus einem Federblech besteht.

4. Diebstahlsicherung nach Anspruch 1, dadurch gekennzeichnet, daß das federnde Element (2) ringförmig ausgebildet ist und an der Innenwand der Überwurfmutter (1) anliegt.

5. Diebstahlsicherung nach Anspruch 4, dadurch gekennzeichnet, daß das Befestigungsende (12) in einer radial gerichteten Bohrung (13) der Überwurfmutter (1) angeordnet ist.

6. Diebstahlsicherung nach Anspruch 1, dadurch gekennzeichnet, daß das federnde Element (2) ringförmig ausgebildet ist und in einer Umfangsnut (14) im Innern der Überwurfmutter (1) angeordnet ist.

7. Diebstahlsicherung nach Anspruch 6, dadurch gekennzeichnet, daß das Befestigungsende (12) in einer achsparallelen Nut (15) in der Innenwand der Überwurfmutter (1) angeordnet ist.

8. Diebstahlsicherung nach Anspruch 3, dadurch gekennzeichnet, daß von dem Federblech (2) mehrere Zungen (6,6',6'',6'') längs des Umfangs abgebogen sind.

9. Diebstahlsicherung nach Anspruch 8, dadurch gekennzeichnet, daß der Abstand der Zungen (6,6',6'',6'') auf den Abstand der Schlitze (7) in dem federnden Gehäuseteil (8) des Thermostaten (5) abgestimmt ist.

**Claims**

1. Theft protection for a radiator valve thermostat, wherein the thermostat (5) is secured to the radiator valve by means of a screw cap (1) being slipped over a sleeve- shaped resilient housing portion (9) of the thermostat with said housing being provided with slots (7) parallel to its axis and with said screw cap being screwed to a thread (11) at a socket, characterized in that a resilient element (2) is arranged within said screw cap and is secured against rotation to said screw cap with said element comprising at least a warped end (3, 6) which projects into at least one of said slots (7).

2. Theft protection according to claim 1, characterized in that the resilient element (2) consists of a wire.

3. Theft protection according to claim 1, characterized in that the resilient element (2) consists of a spring plate.

4. Theft protection according to claim 1, characterized in that the resilient element (2) is ring-shaped and abuts against the inner wall of said screw cap (1).

5. Theft protection according to claim 4, characterized in that fastening end (12) of said element is inserted into a radial bore (13) of said screw cap (1).

6. Theft protection according to claim 1, characterized in that the resilient element (2) is ring-shaped and is arranged within a circumferential groove (14) within the interior wall of said screw cap (1).

7. Theft protection according to claim 6, characterized in that the fastening end (12) is inserted into a groove (15) within the interior wall of said screw cap (1) with said groove extending parallel to the axis of said screw cap.

8. Theft protection according to claim 3, characterized in that a plurality of tongues (6, 6', 6'', 6'') are bent off from said spring plate (2) along its circumference.

9. Theft protection according to claim 8, characterized in that the spacing between the tongues (6, 6', 6'', 6'') is matched to the spacing of said slots (7) within said resilient housing portion (9) of said thermostat (5).

**Revendications**

1. Anti-vol pour un thermostat d'une soupape de radiateur, comportant un écrou-raccord (1) reliant le thermostat (5) à la soupape du radiateur et qui est emmanché sur l'élément de boîtier en forme de douille élastique (9), muni de fentes (7) parallèles à l'axe, du thermostat (5) et est vissé au moyen d'un filetage (11) sur une tubulure, caractérisé en ce qu'à l'intérieur de l'écrou-raccord (1) se trouve disposé un organe élastique (2) bloqué contre toute rotation et qui comporte au moins une extrémité coudée (3, 6), par laquelle il s'engage dans au moins l'une des fentes (7).

2. Anti-vol selon la revendication 1, caractérisé en ce que l'organe élastique (2) est constitué par un fil.

3. Anti-vol selon la revendication 1, caractérisé en ce que l'organe élastique (2) est constitué par une tôle à ressorts.

4. Anti-vol selon la revendication 1, caractérisé en ce que l'organe elastique (2) est réalisé avec une forme annulaire et s'applique contre la paroi intérieure de l'écrou-raccord (1).

5. Anti-vol selon la revendication 4, caractérisé en ce que l'extrémite de fixation (12) est disposée dans un perçage radial (13) de l'écrou-raccord (1).

6. Anti-vol selon la revendication 1, caractérisé en ce que l'organe élastique (2) est réalisé avec une forme annulaire et est disposé dans une rainure péripherique (14) ménagée à l'interieur de l'écrou-raccord (1).

7. Anti-vol selon la revendication 6, caractérisé en ce que l'extrémite de fixation (12) est disposée dans une rainure (15), parallèle à l'axe, menagée dans la paroi intérieure de l'écrou-raccord (1).

8. Anti-vol selon la revendication 3, caractérisé en ce que plusieurs languettes (6,6',6'',6''') sont recourbées, partir de la tôle à ressorts (2), le long de la périphérie.

9. Anti-vol selon la revendication 8, caractérisé en ce que la distance entre les languettes (6,6',6-,6-') est réglée sur la distance des fentes (7) ménagées dans la partie élastique du boîtier (9) du thermostat (5).

Fig. 1a

Fig. 1b

Fig. 1c

Fig. 1d